# EUROPEAN PATENT SPECIFICATION

(11) **EP 2 247 491 B1**
(45) Date of publication and mention of the grant of the patent: **10.10.2012**
(21) Application number: 09706979.3
(22) Date of filing: 14.01.2009
(51) Int. Cl.: B62D 33/06, B62D 33/067, B62D 33/10

(54) **CAB SUSPENSION ARRANGEMENT AND CAB SUSPENSION**
FAHRERHAUSLAGERUNGSANORDNUNG UND FAHRERHAUSLAGERUNG
AGENCEMENT DE SUSPENSION DE CABINE ET SUSPENSION DE CABINE

(30) Priority: 31.01.2008 SE 0800238
(43) Date of publication of application: 10.11.2010
(73) Proprietor: Scania CV AB, 151 87 Södertälje (SE)
(72) Inventor: JÄRNSTRÖM, Sune, 151 46 Södertälje (SE); LANGHED, Tor, 122 64 Enskede (SE)
(86) International application number: PCT/SE2009/050025
(87) International publication number: WO 2009/096880

(56) References cited:
- EP-A2- 0 213 098
- GB-A- 1 399 611

## Description

### Technical field

The present invention relates to a vehicle cab suspension device according to the preamble of claim 1 and a vehicle cab suspension according to the preamble of claim 10.

### Background

Heavy vehicles, e.g. trucks, often have a cab springingly suspended relative to the vehicle's frame at three or four different points.

Heavy vehicles of the aforesaid kind often have a driver's cab which is suspended on, and tiltable relative to, the frame of the vehicle. The cab is tiltable to allow access to the engine for servicing and, where applicable, repairs. The cab, usually at a rear edge, is suspended, e.g. by an air spring arrangement or by mechanical coil springs of a known kind.

These vehicles are often provided with a stabiliser whose function inter alia is to reduce the cab's rolling movements and to damp out the various kinds of springing movements which may occur at the various suspension points between the cab and the frame. In such cases, a usually forward stabiliser comprises a transverse torsion bar which at each of its axial ends has link arms running in the longitudinal direction of the vehicle. The link arms are directly or indirectly supported relative to the cab at their one end and relative to the frame at their other end.

These vehicles are also often further provided with shock absorbers whose functions are inter alia to damp the cab's movements and to control the cab's vertical movement relative to the frame.

GB 1 399 611 A refers to a vehicle cab suspension device intended for suspension of a sprung driver's cab relative to a vehicle frame, whereby a rear cab suspension comprises cab suspension devices in the form of coil springs and shock absorbers and a forward cab suspension comprises cab suspension devices arranged on each side of the cab and each comprising a shock absorber and a link arm which is oriented substantially in the longitudinal direction of the vehicle, which link arms on each side of the cab are united by a stabiliser. The link arms are further supported relative to the cab and the frame. The shock absorbers of the forward cab suspension damp the cab's movements, and the stabiliser of the forward cab suspension limits the cab's rolling movements. Rubber bump stops carried by a rod pivotally connected to the link arm co-operate with a frusto-conical housing arranged at the underside of the cab. Said GB documents shows the preamble features of independent claim 1.

A problem of cab suspensions with link arms comprising shock absorbers and stabilisers is that shock absorbers and stabilisers are relatively expensive components. Another problem of cab suspensions with link arms comprising shock absorbers and stabilisers is that shock absorbers and stabilisers and their fastenings occupy a relatively large amount of space in the vehicle.

### Brief description of the invention

The problem that shock absorbers and stabilisers are relatively expensive components and that they with their fastenings occupy a relatively large amount of space in vehicles with cab suspensions which comprise link arms, shock absorbers and stabilisers is solved according to the invention by arranging a cab suspension device according to the characterising part of claim 1 and a cab suspension according to the characterising part of claim 10.

A cab suspension device comprising the characteristics of claim 1 and a cab suspension comprising the characteristics of claim 10 afford, without substantially reducing the vibration insulation between the cab and the frame, the advantage of achieving simpler and less expensive suspension of a vehicle cab in that the relatively short spring excursion of the springing device according to the invention makes it possible to control the cab's vertical movement and limits the vehicle's rolling movement by means of springing devices which obviate the need for shock absorbers or stabilisers.

### Brief description of the drawings

The invention is explained in more detail below with reference to the attached drawings, in which:
Figure 1 depicts schematically a side view of a forward suspension and cushioning arrangement for a cab for a heavy vehicle according to a first embodiment of the invention, and
Figure 2 depicts schematically an enlarged partial view of the forward suspension and cushioning arrangement depicted in Fig. 1

### Description of preferred embodiments

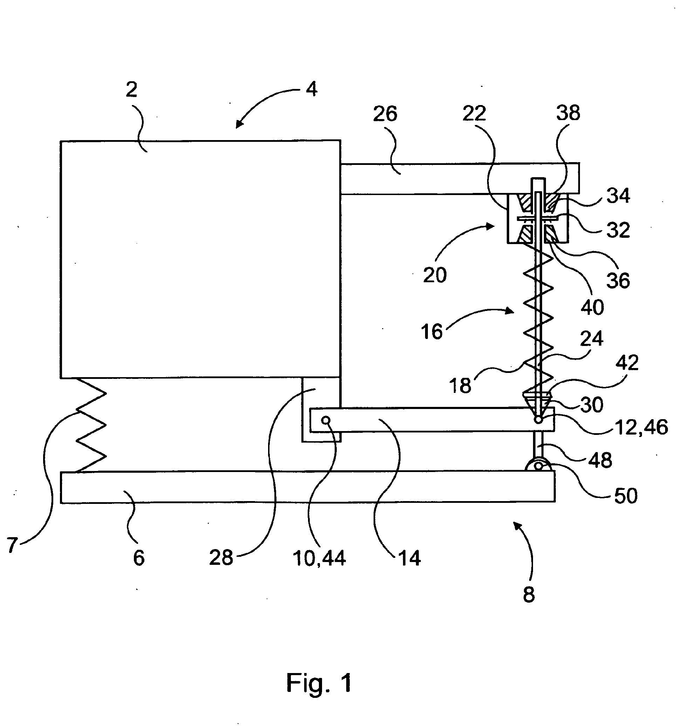

Figure 1 depicts schematically a side view of a forward suspension and cushioning arrangement for a cab 2 for a heavy vehicle 4 according to a first embodiment of the invention. The cab 2 of a heavy vehicle 4, e.g. a truck, is usually suspended on a vehicle frame 6 which mainly comprises two parallel longitudinal side members joined to one another by a number of transverse members, and an engine is fastened to the frame 6 in a conventional manner. To render the engine readily accessible for inspection and, where applicable, repairs, the cab 2 is preferably tiltable forwards relative to the frame 6. The cab 2 is cushioningly suspended relative to the frame 6, preferably at the front edge of the cab 2, in the manner according to the invention. According to this embodiment, the cab 2 is suspended at its rear edge in some known manner, e.g. by an air spring arrangement or by mechanical coil springs 7, possibly in combination with shock absorbers. The forward cab suspension comprises cab suspension devices 8 arranged on each side of the cab 2.

The cab suspension device 8 comprises a link arm 14 supported articulatedly relative to the cab 2 at a cab hinge 10 and articulatedly relative to the frame 6 at a frame hinge 12. The cab suspension device 8 further comprises a springing device 16 which comprises a springing unit 18 arranged between the cab 2 and the frame hinge 12 of the link arm 14, and further also a springing control unit 20 which comprises a control housing 22 fastened to the cab and a control rod 24 supported articulatedly relative to the frame hinge 12 of the link arm 14. The springing unit 18 bears the static load of the cab 2 and the springing control unit 20 controls the springing movement in a manner described in more detail below.

The control housing 22 fastened to the cab may be arranged directly on the cab 2 or on a cab bracket 26 fastened to the cab. In a similar manner, the cab hinge of the link arm may be supported directly in the cab 2 or in a link arm bracket 28 fastened to the cab.

As mentioned above, the springing unit 18 is arranged between the cab 2 and the frame hinge 12 of the link arm 14, i.e. bearing respectively against the cab 2 or a cab bracket 26 fastened to the cab or the control housing 22 fastened to the cab, and against a spring suspension 30 of any desired kind arranged at the frame hinge 12, the springing unit 18 thus being adapted to bearing the static load of the cab 2. The springing unit 18 may be a traditional coil spring, a spring of some other kind or, if level adjustment is desired, even an air spring such as an air bellows.

According to this embodiment of the invention, a stop element 32 is fixed on the control rod 24 and two bump stops 34, 36 are also fastened to the control housing 22 fastened to the cab. As may be seen in the drawing, the stop element 32 is movable between the two bump stops 34, 36 in the axial direction of the control rod 24, since the control rod is fitted in a duct 38, 40 in the respective bump stops 34, 36, possibly with a little play, whereby the control rod 24 can move in its axial direction relative to the bump stops 34, 36.

The springing control unit 20 thus controls the springing movements of the cab 2 relative to the frame 6 in that the stop element 32 on the control rod 24 articulately fastened to the frame 6 moves relative to the bump stops 34, 36 and hence also relative to the control housing 22 and relative to the cab 2 when the vehicle 4 travels over uneven running surfaces.

The springing unit 18 is preferably adjustable by an adjustment unit 42 of a mechanical, electrical, pneumatic, hydraulic or some other kind, whereby the position of the stop element 32 between the bump stops 34, 36 can be set in such a way that the spring excursion of the springing device 16 is equal in both positive and negative directions irrespective of the weight with which the cab is loaded. During the manufacture of the vehicle 4, the springing unit is set according to the weight of the cab 2 and the weight of a notional driver, but the adjustability of the springing unit 18 makes it possible to compensate for further loads, e.g. further persons in the cab 2.

The link arm 14 is articulatedly supported relative to the cab 2 at a cab hinge 10 by a bearing 44 which has preferably to be adapted to damping of vibrations between the frame 6 and the cab 2, e.g. by means of a vibration-insulating rubber bushing. The link arm 14 is also articulatedly supported relative to the frame 6 at a frame hinge 12 by a bearing 46 which need not be adapted to damping of vibrations between the frame 6 and the cab 2, e.g. by means of a plain bearing, although the bearing 46 may also be a rubber bushing with insulating function.

The drawing also shows a tilt arm 48 and a tilt hinge 50 about which the cab 2 is adapted to being tilted relative to the frame 6 if it is necessary to reach an engine arranged under the cab 2 for servicing or the like. The tilt arm 48 is nevertheless fastened to the frame while the vehicle is in motion, i.e. during the time when the cab suspension device 8 according to the invention is intended to control the vehicle's springing movement.

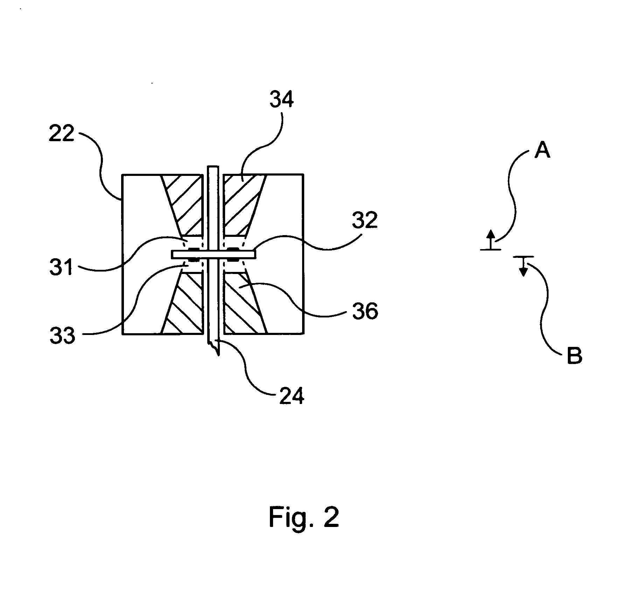

Figure 2 depicts schematically an enlarged partial view of the forward suspension and cushioning arrangement depicted in Figure 1. As mentioned above, a stop element 32 is fixed on the control rod 24 and two bump stops 34, 36 are also fastened to the control housing 22 fastened to the cab. As illustrated by the respective continuous and broken lines marked 34, 36 and 31, 33 in the drawing, the bump stops 34, 36 may be arranged with or without play relative to the stop element 32, since the bump stops 34, 36 are made of elastic material which allows movement of the stop element 32 relative to the bump stops 34, 36 even if the latter abut against the stop element 32 when the cab is in its position of rest, i.e. the position in which the spring excursion A, B of the springing device 16 is the same in both positive and negative directions. The fact that the bump stops 34, 36 are made of elastic material means that the control rod 24 may also be set somewhat obliquely relative to the control housing 22.

An indicative value for the spring excursion of conventional cab suspension devices is of the order of ± 30-50 mm. The spring excursion A, B of the springing device 16 according to the invention is shorter, preferably adapted to being within the range ± 15 mm, preferably within the range ± 10 mm, thereby obviating the need for any stabiliser of the vehicle in that the rolling movement is limited by the short spring excursion A, B of a springing device 16 on each side of the vehicle, which springing devices are situated substantially symmetrically about the vehicle's centreline at a distance of, for example, about 800-2400 mm, preferably about 1000-1800 mm, e.g. about 1200 mm, from one another, depending on the shape of the bump stops 34, 36 and the rigidity of their constituent material. The aforesaid relatively short spring excursion also results in control of the vertical movement by the springing devices 16 mentioned above, thereby obviating the need for any shock absorbers at these cab suspension points.

The invention as described above exemplifies a forward cab suspension, but springing devices according to the invention may also be arranged at a rear edge of the cab. If springing devices according to the invention are arranged at a front edge of the cab, similar springing devices but with the link arm removed may be arranged at the cab's rear edge. To achieve the desired springing action and vibration insulation with springing devices according to the invention, the cab has to be cushioned relative to the frame at at least two points at the cab's front edge and at at least one point at the cab's rear edge.

## Claims

1. A vehicle cab suspension device for suspension of a sprung driver's cab (2) relative to a vehicle frame (6), whereby the cab suspension device (8) comprises a link arm (14) supported articulatedly relative to the cab (2) at a cab hinge (10) and articulatedly relative to the frame (6) at a frame hinge (12), to allow relative pivoting respectively between the link arm (14) and the cab bracket (2) about a spindle running substantially in the transverse direction of the vehicle (4) and between the link arm (14) and the frame (6) about a spindle running substantially in the transverse direction of the vehicle (4), which cab suspension device (8) comprises a springing unit (18) arranged between the cab (2) and the frame hinge (12) of the link arm (14) and further comprises a springing control unit (20) comprising a control housing (22) fastened to the cab and a control rod (24) supported articulatedly at the frame hinge (12) of the link arm (14), **characterised in that** a stop element (32) is fixed on the control rod (24) and at least two bump stops (34, 36) are fastened to the control housing (22) which is itself fastened to the cab, which control rod (24) is also fitted in a duct (38, 40) in the respective bump stops (34, 36), whereby the control rod (24) and the stop element (32) are adapted to being able to move in the axial direction of the control rod (24) relative to the bump stops (34, 36) so that the springing control unit (20) controls the springing movement of the driver's cab (2) relative to the frame (6) when the vehicle is in motion.

2. A cab suspension device according to claim 1, **characterised in that** the control housing (22) fastened to the cab is arranged on a cab bracket (26) fastened to the cab.

3. A cab suspension device according to any one of the foregoing claims, **characterised in that** the cab hinge of the link arm is supported in a link arm bracket (28) fastened to the cab.

4. A cab suspension device according to any one of the foregoing claims, **characterised in that** the springing unit (18) bears against the control housing (22) fastened to the cab and against a spring suspension (30) arranged at the frame hinge (12).

5. A cab suspension device according to any one of the foregoing claims, **characterised in that** the springing unit (18) is adjustable by an adjustment unit (42) of a mechanical, electrical, pneumatic, hydraulic or some other kind, whereby the position of the stop element (32) between the bump stops (34, 36) can be set in such a way that the spring excursion (A, B) of the springing device (16) is equal in both positive and negative directions irrespective of the weight with which the cab (2) is loaded.

6. A cab suspension device according to any one of the foregoing claims, **characterised in that** the bump stops (34, 36) are arranged with or without play relative to the stop element (32) when the cab (2) is in its position of rest.

7. A cab suspension device according to any one of the foregoing claims, **characterised in that** the link arm (14) is articulatedly supported relative to the cab (2) by a bearing (44) comprising a vibration-insulating material such as rubber or polyurethane adapted to damping of vibrations between the frame (6) and the cab (2).

8. A cab suspension device according to any one of the foregoing claims, **characterised in that** the link arm (14) is articulatedly supported relative to the frame (6) by a bearing (46) with insulating function.

9. A cab suspension device according to any one of the foregoing claims, **characterised in that** the spring excursion (A, B) of the springing device (16) is adapted to being within the range ± 15 mm, preferably within the range ± 10 mm.

10. A vehicle cab suspension comprising cab suspension devices according to any of the foregoing claims, **characterised in that** the cab suspension devices (8) are arranged on their respective sides of a longitudinal vertical plane through the middle of the vehicle, resulting in both limitation of rolling movement and control of vertical movement.

11. A cab suspension according to claim 10, **characterised in that** the springing devices (16) of the cab suspensions (8) are situated substantially symmetrically about the vehicle's centreline at a distance of about 800-2400 mm, preferably about 1000-1800 mm, e.g. about 1200 mm, from one another and that the spring excursions (A, B) of the springing devices are within the range ± 15mm, preferably within the range ± 10 mm.

## Patentansprüche

1. Fahrerhauslagerungsvorrichtung eines Fahrzeugs zum Lagern eines gefederten Fahrerhauses (2) relativ zu einem Fahrzeugrahmen (6), wobei die Fahrerhauslagerungsvorrichtung (8) einen Verbindungsarm (14) umfasst, der in einem Fahrerhausscharnier (10) relativ zum Fahrerhaus (2) schwenkbar gelagert ist und relativ zum Rahmen (6) in einem Rahmenscharnier (12) schwenkbar gelagert ist, um das relative Schwenken zwischen dem Verbindungsarm (14) und dem Fahrerhauslager (2) um eine Achse zu ermöglichen, die sich im Wesentlichen in einer transversalen Richtung des Fahrzeugs (4) erstreckt und zwischen dem Verbindungsarm (14) und dem Rahmen (6), um eine Achse, die im Wesentlichen in einer transversalen Richtung des Fahrzeugs liegt (4), wobei die Fahrerhauslagerungsvorrichtung (8) eine Federungseinheit (18) umfasst, die zwischen dem Fahrerhaus (2) und dem Rahmenscharnier (12) des Verbindungsarms (14) angeordnet ist, und weiterhin eine Federungssteuereinheit (20) umfasst, die ein Steuerungsgehäuse (22) umfasst, welches am Fahrerhaus befestigt ist, und eine Kontrollstange (24), die schwenkbar am Rahmenscharnier (12) des Verbindungsarms (14) gelagert ist,
**dadurch gekennzeichnet, dass** ein Anschlagelement (32) an der Kontrollstange (24) fixiert ist und das mindestens zwei Anschläge (34, 36) am Steuerungsgehäuse (22) befestigt sind, welches selbst am Fahrerhaus befestigt ist, wobei die Kontrollstange (24) auch in einen Kanal (38, 40) innerhalb der entsprechenden Anschläge (34, 36) eingepasst ist, wobei die Kontrollstange (24) und das Anschlagelement (32) dazu eingerichtet sind, um in axialer Richtung der Kontrollstange (24) relativ zu den Anschlägen (34, 36) bewegbar zu sein, so dass die Federungssteuereinheit (20) die Federungsbewegung des Fahrerhauses (2) relativ zum Rahmen (6) steuert, wenn sich das Fahrzeug in Bewegung befindet.

2. Fahrerhauslagerungsvorrichtung nach Anspruch 1,
**dadurch gekennzeichnet, dass** das Steuerungsgehäuse (22), welches am Fahrerhaus befestigt ist, an einem Fahrerhausträger (26) angeordnet ist, der am Fahrerhaus befestigt ist.

3. Fahrerhauslagerungsvorrichtung nach einem der vorhergehenden Ansprüche,
**dadurch gekennzeichnet, dass** das Fahrerhausscharnier des Verbindungsarms in einem Verbindungsarmträger (28) gelagert ist, der am Fahrerhaus befestigt ist.

4. Fahrerhauslagerungsvorrichtung nach einem der vorhergehenden Ansprüche,
**dadurch gekennzeichnet, dass** die Federungseinheit (18) gegen das Steuerungsgehäuse (22) drückt, welches am Fahrerhaus befestigt ist, und gegen eine Federlagerung (30) drückt, die am Rahmenscharnier (12) angeordnet ist.

5. Fahrerhauslagerungsvorrichtung nach einem der vorhergehenden Ansprüche,
**dadurch gekennzeichnet, dass** die Federungseinheit (18) justierbar durch eine Justiereinheit (42) mechanischer, elektrischer, pneumatischer, hydraulischer oder anderer Art ist, wobei die Position des Anschlagelements (32) zwischen den Anschlägen (34, 36) in einer Art und Weise festgelegt werden kann, dass die Federauslenkung (A, B) der Federungsvorrichtung (16) gleich in positiver wie negativer Richtung ist, unabhängig von dem Gewicht, mit dem das Fahrerhaus beladen ist.

6. Fahrerhauslagerungsvorrichtung nach einem der vorhergehenden Ansprüche,
**dadurch gekennzeichnet, dass** die Anschläge (34, 36) mit oder ohne Spiel relativ zu dem Anschlagelement (32) angeordnet sind, wenn das Fahrerhaus (2) in seiner Ruheposition ist.

7. Fahrerhauslagerungsvorrichtung nach einem der vorhergehenden Ansprüche,
**dadurch gekennzeichnet, dass** der Verbindungsarm (14) relativ zum Fahrerhaus (2) schwenkbar gelagert ist, durch ein Lager (44), welches ein vibrationsisolierendes Material wie Gummi oder Polyurethan umfasst, dazu eingerichtet, um Vibrationen zwischen dem Rahmen (6) und dem Fahrerhaus (2) zu dämpfen.

8. Fahrerhauslagerungsvorrichtung nach einem der vorhergehenden Ansprüche,
**dadurch gekennzeichnet, dass** der Verbindungsarm (14) relativ zum Rahmen (6) schwenkbar gelagert ist, durch ein Lager (46) mit einer isolierenden Funktion.

9. Fahrerhauslagerungsvorrichtung nach einem der vorhergehenden Ansprüche,
**dadurch gekennzeichnet, dass** die Federauslenkung (A, B) der Federungsvorrichtung (16) derart ausgeführt ist, dass sie innerhalb eines Bereichs von ± 15 mm liegt, vorzugsweise innerhalb eines Bereichs von ± 10 mm.

10. Fahrerhauslagerung, die Fahrerhauslagerungsvorrichtungen nach einem der vorhergehenden Ansprüche umfasst,
**dadurch gekennzeichnet, dass** die Fahrerhauslagerungsvorrichtungen (8) an jeweiligen Seiten einer länglichen vertikalen Ebene durch die Mitte des Fahrzeugs angeordnet sind, was sowohl in einer Begrenzung der Rollbewegungen wie auch der Kontrolle der vertikalen Bewegung resultiert.

11. Fahrerhauslagerung nach Anspruch 10,
**dadurch gekennzeichnet, dass** die Federungsvorrichtungen (16) der Fahrerhauslagerungen (8) im Wesentlichen symmetrisch um die Mittellinie des Fahrzeugs angeordnet sind in einem Abstand von 800 bis 2.400 mm zueinander, vorzugsweise in einem Abstand von 1.000 bis 1.800 mm, zum Beispiel 1.200 mm, und dass die Federauslenkungen (A, B) der Federungseinheiten innerhalb eines Bereichs von ± 15 mm sind, vorzugsweise innerhalb eines Bereichs von ± 10 mm.

## Revendications

1. Dispositif de suspension de cabine de véhicule pour la suspension d'une cabine de conducteur suspendue (2) vis-à-vis d'un châssis de véhicule (6), le dispositif de suspension de cabine (8) comprenant un bras de liaison (14) supporté de façon articulée par rapport à la cabine (2) par une articulation de cabine (10) et de façon articulée par rapport au châssis (6) par une articulation de châssis (12), de façon à permettre un pivotement relatif, respectivement, entre le bras de liaison (14) et l'étrier de cabine (2) autour d'un arbre rotatif s'étendant sensiblement dans la direction transversale du véhicule (4) et entre le bras de liaison (14) et le châssis (6) autour d'un arbre de rotation s'étendant sensiblement dans la direction transversale du véhicule (4), ce dispositif de suspension de cabine (8) comprenant une unité élastique (18) disposée entre la cabine (2) et l'articulation de châssis (12) du bras de liaison (14), et comprenant de plus une unité de commande d'élasticité (20) comprenant un boîtier de commande (22) fixé à la cabine et une tige de commande (24) supportée de façon articulée par l'articulation de châssis (12) du bras de liaison (14), **caractérisé en ce qu'**un élément d'arrêt (32) est fixé sur la tige de commande (24) et **en ce qu'**au moins deux butées de suspension (34, 36) sont fixés au boîtier de commande (22), qui est lui-même fixé à la cabine, cette tige de commande (24) étant également disposée dans un conduit (38, 40) dans les butées de suspension respectives (34, 36), grâce à quoi la tige de commande (24) et l'élément d'arrêt (32) sont adaptés de façon à être susceptibles de se déplacer dans la direction axiale de la tige de commande (24) par rapport aux butées de suspension (34, 36), de telle sorte que l'unité de commande d'élasticité (20) commande le mouvement élastique de la cabine de conducteur (2) par rapport au châssis (6) lorsque le véhicule est en déplacement.

2. Dispositif de suspension de cabine selon la revendication 1, **caractérisé en ce que** le boîtier de commande (22) fixé à la cabine est disposé sur un étrier de cabine (26) fixé à la cabine.

3. Dispositif de suspension de cabine selon l'une quelconque des revendications précédentes, **caractérisé en ce que** l'articulation de cabine du bras de liaison est supportée dans un étrier de bras de liaison (28) fixé à la cabine.

4. Dispositif de suspension de cabine selon l'une quelconque des revendications précédentes, **caractérisé en ce que** l'unité élastique (18) porte contre le boîtier de commande (22) fixé à la cabine et contre une suspension à ressort (30) disposée sur l'articulation de châssis (12).

5. Dispositif de suspension de cabine selon l'une quelconque des revendications précédentes, **caractérisé en ce que** l'unité élastique (18) est réglable par une unité de réglage (42) d'un type mécanique, électrique, pneumatique, hydraulique ou d'un quelconque autre type, grâce à quoi la position de l'élément d'arrêt (32) entre les butées de suspension (34, 36) peut être établie de telle sorte que l'excursion élastique (A, B) du dispositif élastique (16) soit égale dans les deux directions positive et négative, quel que soit le poids dont la cabine (2) est chargée.

6. Dispositif de suspension de cabine selon l'une quelconque des revendications précédentes, **caractérisé en ce que** les butées de suspension (34, 36) sont configurées avec ou sans jeu par rapport à l'élément d'arrêt (32) lorsque la cabine (2) est dans sa position de repos.

7. Dispositif de suspension de cabine selon l'une quelconque des revendications précédentes, **caractérisé en ce que** le bras de liaison (14) est supporté de façon articulée par rapport à la cabine (2) par un palier (44) comprenant un matériau isolant vis-à-vis des vibrations tel que le caoutchouc ou le polyuréthane, adapté de façon à amortir les vibrations entre le châssis (6) et la cabine (2).

8. Dispositif de suspension de cabine selon l'une quelconque des revendications précédentes, **caractérisé en ce que** le bras de liaison (14) est supporté de façon articulée par rapport au châssis (6) par un palier (46) avec une fonction d'isolement.

9. Dispositif de suspension de cabine selon l'une quelconque des revendications précédentes, **caractérisé en ce que** l'excursion élastique (A, B) du dispositif élastique (16) est adaptée de façon à se trouver à l'intérieur de la plage de ± 15 mm, et, de préférence, à l'intérieur de la plage de ± 10 mm.

10. Suspension de cabine de véhicule comprenant des dispositifs de suspension de cabine selon l'une quelconque des revendications précédentes, **caractérisée en ce que** les dispositifs de suspension de cabine (8) sont disposés sur les côtés respectifs d'un plan vertical longitudinal traversant le milieu du véhicule, produisant en résultat tout à la fois une limitation du mouvement de roulis et un contrôle du mouvement vertical.

11. Suspension de cabine selon la revendication 10, **caractérisée en ce que** les dispositifs élastiques (16) des suspensions de cabine (8) sont situés de façon sensiblement symétrique autour de la ligne centrale du véhicule à une distance comprise entre environ 800 et 2400 mm, et, de préférence, entre environ 1000 et 1800 mm, par exemple d'environ 1200 mm, les uns des autres, et **en ce que** les excursions élastiques (A, B) des dispositifs élastiques sont comprises à l'intérieur de la plage de ± 15 mm, et, de préférence, à l'intérieur de la plage de ± 10 mm.
